# EUROPÄISCHE PATENTSCHRIFT

(11) **EP 1 296 000 B1**
(45) Veröffentlichungstag und Bekanntmachung des Hinweises auf die Patenterteilung: **14.05.2008**
(21) Anmeldenummer: 02021288.2
(22) Anmeldetag: 19.09.2002
(51) Int. Cl.: E04B 2/82, E04G 21/30, E04F 13/06, E04F 15/02, E04F 15/14, E06B 1/62, E04B 1/68

(54) **Dicht- und Isoliersystem**
Sealing and insulating system
Système d'étanchéité et d'isolation

(30) Priorität: 19.09.2001 DE 10146223; 10.05.2002 DE 10220920
(43) Veröffentlichungstag der Anmeldung: 26.03.2003
(73) Patentinhaber: Klemens, Josef, 54317 Lorscheid (DE)
(72) Erfinder: Klemens, Josef, 54317 Lorscheid (DE)
(74) Vertreter: Grosse, Wolfgang

(56) Entgegenhaltungen:
- WO-A-01/71123
- DE-A- 19 819 605
- DE-U- 29 521 668
- DE-U- 29 620 179
- US-A- 2 643 423

## Beschreibung

Die vorliegende Erfindung betrifft ein Dicht- und Isoliersystem nach dem Oberbegriff des Anspruchs 1.

Dicht- und Isoliersysteme werden an Gebäuden in zunehmendem Maße eingesetzt, da das Bewusstsein für Energieeinsparungen und die gesetzlichen Auflagen hierzu ständig verstärkt werden. Aufgrund dieser Anforderungen besteht ein allgemeines Interesse daran, Bauwerke und insbesondere die Fassaden von Gebäuden derart zu dämmen, zu isolieren und abzudichten, dass die Energieverluste möglichst gering sind. Darüber hinaus müssen derartige Dicht- und Isoliersysteme jedoch kostengünstig herstell- und verarbeitbar sein und entsprechend der langen Lebensdauer der Gebäude selbst eine bestimmte Haltbarkeit aufweisen.

Ein derartiges Dicht- und Isoliersystem, das diesen Anforderungen genügt und darüber hinaus auch den Anschluss und den Abschluss des Systems im Sinne einer Bauanschlussfuge gewährleistet aber auch das Abschließen und Abdichten von Fugen ganz allgemein an allen Arten von Maschinen, Anlagen usw. in Form von Dehnfugen, stumpfen Stößen usw. erlaubt, ist beispielsweise in der WO 01/71123 A2 beschrieben. Da die vorliegende Erfindung auf diesem Dicht- und Isoliersystem aufbaut, wird hiermit vollumfänglich auf die Offenbarung der WO 01/71123 A2 verwiesen.

Obwohl das Dicht- und Isoliersystem, wie es in der WO 01/71123 A2 beschrieben ist, bereits sehr gute Eigenschaften aufweist, besteht trotzdem Verbesserungspotential hinsichtlich der Einfachheit der Herstell- und Verarbeitbarkeit.

Insbesondere ist aus der WO 01/71123 A2 ein Dicht- und Isolierprofil bekannt, welches einen elastischen, streifenförmigen Grundkörper mit mindestens einem, vorzugsweise zwei oder mehreren Anschlussbereichen zum Anschluss und zur Aufnahme von Bauteilen aufweist, wobei eine im Verhältnis zum flexiblen Grundkörper starre Anschlussschiene integral mit dem Grundkörper verbunden ist oder lösbar an einem Anschlussbereich des Grundkörpers angeordnet werden kann. Die einstückige Verbindung der Anschlussschiene mit dem flexiblen Grundkörper des Dicht- und Isolierprofils besitzt jedoch den Nachteil, dass eine derartige Gestaltung nicht ausreichend flexibel für die verschiedenen Einsatzzwecke ist. Zwar ist auch aus der WO 01/71123 A2 eine lösbare Verbindung der Anschlussschiene mit dem flexiblen Grundkörper bekannt, jedoch weist diese Ausgestaltung den Nachteil auf, dass hier die Anschlussschiene im wesentlichen nur auf den Grundkörper aufgelegt oder zwischen am Grundkörper vorhandenen Vorsprüngen angeordnet ist. Dies führt dazu, dass die Anschlussschiene bspw. bei einem Deckenanschluss zusätzlich befestigt werden muss oder solange gehalten werden muss, bis das entsprechende Bauteil an der Decke angeordnet ist. Außerdem kann die Anschlussschiene in dieser Ausgestaltung nur eine Haltefunktion übernehmen, wenn an beiden Schenkeln der U- oder C- förmigen Anschlussschiene ein entsprechendes Bauteil vorgesehen ist.

Ferner sind aus der DE 198 19 605 A1 oder auch der DE 296 20 179 U1 Abschlussleisten zum Abdichten eines Rahmenteils gegenüber einer Mauerlaibung mit entsprechenden Verrastungskonturen bekannt, wobei zwischen Rahmen bzw. Fensterzarge und Mauerlaibung bzw. darauf angebrachter Isolierschicht eine Abschlussleiste bzw. ein Deckprofil vorgesehen ist. Dieses Deckprofil weist beiderseitig U-förmige Verrastkonturen auf, wobei diese einerseits mit entsprechenden Verrastkonturen auf der Fensterzarge in Eingriff bringbar ist und andererseits eine Deckschicht, welche auf der Isolierschicht aufgebracht ist, gefüllt wird, so dass sich ein nahtloser Übergang zwischen Fensterzarge und Mauerlaibung bzw. darauf aufgebrachter Isolierschicht ergibt. Die Abschlussleiste zum Abdichten eines Rahmenteils gegenüber der Mauerlaibung besitzt jedoch den Nachteil, dass eine derartige Gestaltung nicht ausreichend flexibel für die verschiedenen Einsatzzwecke ist.

Neben diesen komplexen Dicht- und Isoliersystemen sind auch einfachere Lösungen im Stand der Technik vorgeschlagen worden, die jedoch allesamt nicht den vielfältigen Anforderungen an derartige Dicht- und Isoliersysteme gerecht werden.

Beispielsweise beschreibt die DE 295 21 668 U1ein Verbunddichtmaterial, welches zum Abdichten von Flächen und Öffnungen, insbesondere Fugen zwischen gleichen oder unterschiedlichen Bauelementen, insbesondere als Feuchtigkeitssperrschicht ausgebildet ist. Dieses flächige Verbundmaterial weist entlang seiner Längsseiten längliche Bereiche mit Lochungen auf, die den Durchtritt von zum Verkleben des Verbundmaterials verwendeten Klebstoff erleichtern und dadurch eine weitere Erhöhung der Haftsicherheit des Verbundmaterials an den Bauwerksteilen bewirken.

Auch die US 2 643 423 beschreibt eine Vorrichtung zum Verbinden von Trockenbauwänden, insbesondere ein Winkelelement zur Verbindung von Trockenbauwänden, welches an seinen Schenkeln mit Bohrungen versehen ist, um mittels Schrauben an den Trockenbauwänden befestigt zu werden. Ferner ist ein perforiertes Klebeband vorgesehen, welches zur Verbesserung der Hafteigenschaften von später zum Verputzen der Verbindungsstelle aufgebrachtem Mörtel vorgesehen ist.

Sowohl das beschriebene Verbundmaterial als auch die Vorrichtung zum Verbinden von Trockenbauwänden weisen allerdings keine Dicht- und Isolierprofile zum flexiblen Verbinden der flächigen Dicht- und Isolierstoffe untereinander oder zum Anschließen der Dicht- und Isolierstoffe an Bauwerksteile auf.

Es ist deshalb Aufgabe der vorliegenden Erfindung, ein verbessertes Dicht- und Isoliersystem vorzuschlagen, wobei die darin verwendeten Komponenten einfach herstellbar und an den zu dämmenden, zu isolierenden oder abzudichtenden Bauteilen einfacher verarbeitbar bzw. flexibel einsetzbar sind. Insbesondere ist es auch Aufgabe der Erfindung das Dicht- und Isoliersystem der WO 01/71123 A2 in der Weise zu verbessern, dass die darin verwendeten Komponenten einfacher herstellbar und an den zu dämmenden, zu isolierenden oder abzudichtenden Bauteilen einfacher verarbeitbar sind.

Diese Aufgabe wird gelöst durch ein gewerksübergreifendes Dicht- und Isoliersystem mit den Merkmalen des Anspruchs 1. Vorteilhafte Ausgestaltungen sind Gegenstand der abhängigen Ansprüche.

Die Verbesserung des vorliegenden Dicht- und Isoliersystems besteht nach einem ersten Aspekt darin, dass in den Anschlussbereichen der im Dicht- und Isoliersystem verwendeten Komponenten, also der Dicht- und Isolierstoffe sowie der entsprechenden Anschlusselemente, wie insbesondere Dicht- und Isolierprofilen, zumindest teilweise Leerräume bzw. Aussparungen vorgesehen sind, die beim Verbinden der entsprechenden Komponenten untereinander oder beim Anschluss der Komponenten an ein Bauwerksteil von Mörtel, Klebemittel oder dergleichen, welches zum Verbinden oder Anbinden verwendet wird, durchsetzt werden kann. Neben Keder-, Klemm-, Rast- oder ähnlichen Anschlussbereichen wurden somit zusätzlich und/oder alternativ Anschlussbereiche mit Durchbrechungen vorgesehen

Auf diese Weise ist es zum einen möglich, auf früher vorgesehene Klebeschichten an den Komponenten, wie z.B. selbstklebende Folien und dergleichen, zu verzichten. Dies erleichtert die Herstellung der verwendeten Komponenten. Zum anderen müssen keine besonderen auf die Komponenten abgestimmten Klebemittel oder Mörtel oder dergleichen an der Baustelle verwendet werden, sondern es können für sämtliche Komponenten die üblichen Mörtel, Putzmittel oder dergleichen verwendet werden, die üblicherweise an einer Baustelle eines Gebäudes verwendet werden. Damit ist auch die Verarbeitung der Komponenten vereinfacht. Darüber hinaus bietet dieses System den Vorteil, in einem Arbeitsschritt mehrere Lagen von Anschlussbereichen von Komponenten miteinander zu verbinden, so dass auch in dieser Hinsicht eine Vereinfachung der Verarbeitbarkeit gegeben ist. Beispielsweise können mehrere miteinander zu verbindende Komponenten, wie z.B. Krallmatten und Noppenfolien, in einem Arbeitsgang in ein Mörtelbett eingedrückt werden.

Darüber hinaus bieten die durchbrochenen bzw. löchrigen Anschlussbereiche der Komponenten den Vorteil, dass Lösemittel durch die Materialaussparungen der Komponenten entweichen können, so dass es keinen Rückstau von Lösemitteln oder von Feuchtigkeit gibt.

Ferner wird durch die löchrige Ausgestaltung der Anschlussbereiche deren Flexibilität und Dehnbarkeit erhöht, so dass die Haltbarkeit verbessert und die Genauigkeit bei der Verarbeitung verringert werden kann. Die erhöhte Flexibilität ermöglicht auch den besseren Ausgleich von Spannungen, z.B. bei der Überbrückung von Bewegungsfugen. Auch ist keine vollflächige Verklebung oder Verschweißung der Komponenten mehr nötig, die eine besondere Sorgfalt beim Auftrag der Klebeschicht bzw. bei der Verarbeitung der Komponenten erfordert. Vielmehr ist bei den löchrigen Anschlussbereichen auch eine teilweise Durchdringung mit Klebe-, Mörtel- oder sonstiger Haftmasse ausreichend, da neben der stofflichen Haftung auch ein Verbund durch Formschluss erzielt wird. Da somit das Haft- bzw. Klebemittel nicht mehr auf die Komponenten abgestimmt werden muss, kann auch die Haftung zum Untergrund verbessert werden, da das Klebe- bzw. Haftungsmittel bzw. der Mörtel nur noch auf den Untergrund abgestimmt sein muss.

Je nach Einsatzzweck und Anwendungsfall kann bei mehreren übereinander angeordneten löchrigen Anschlussbereichen die Anordnung der Leerräume bzw. der Materialaussparungen so gewählt werden, dass sie fluchtend übereinander oder versetzt zueinander angeordnet sind. Dies hängt beispielsweise davon ab, ob die zur Verbindung verwendete pastöse oder flüssige Masse nach der Aushärtung selbst einen Klebe- oder Haftungsbeitrag mit den Komponenten beisteuert oder die Verbindung hauptsächlich über Formschluss herstellt. Eine fluchtend ausgerichtete Anordnung der Materialaussparungen übereinander bei mehreren übereinander angeordneten Anschlussbereichen kann beispielsweise dann vorteilhaft sein, wenn zusätzlich eine Komponente Rast- bzw. Verkrallelemente aufweist, die zusätzlich die Leerräume bzw. Materialaussparungen durchdringen können.

Vorteilhafterweise können die Leerräume bzw. Materialaussparungen der Anschlussbereiche durch eine Lochung oder Stanzung hergestellt werden, so dass es vorteilhaft ist, möglichst regelmäßige Materialaussparungen vorzusehen. Dies verbessert auch die gleichmäßige Lastverteilung bei einer Beanspruchung der Verbindung.

Um eine möglichst gute Verbindung zu gewährleisten, ist es bevorzugt, dass der Flächenanteil der Leerräume bzw. Aussparungen an der Gesamtfläche des Anschlussbereichs mindestens 25%, vorzugsweise jedoch 30 bis 70% und insbesondere ungefähr 50% beträgt.

Weitere Vorteile, Kennzeichen und Merkmale der vorliegenden Erfindung werden bei der nachfolgenden detaillierten Beschreibung von Ausführungsbeispielen anhand der beigefügten Zeichnungen ersichtlich. Die Figuren zeigen hierbei in rein schematischer Weise in
- Fig. 1: eine perspektivische Ansicht eines flächigen Dicht- und Isolierstoffs mit erfindungsgemäßen Anschlussbereichen;
- Fig. 2: eine perspektivische Ansicht eines Anschlusselements in Form eines U-Profils mit einem ebenfalls erfindungsgemäßen Anschlussbereich;
- Fig. 3: eine perspektivische Ansicht eines weiteren Anschlusselements mit erfindungsgemäßem Anschlussbereich;
- Fig. 4: die perspektivische Ansicht eines zweiteiligen Putzabschlussprofils mit einem erfindungsgemäßen Anschlussbereich.

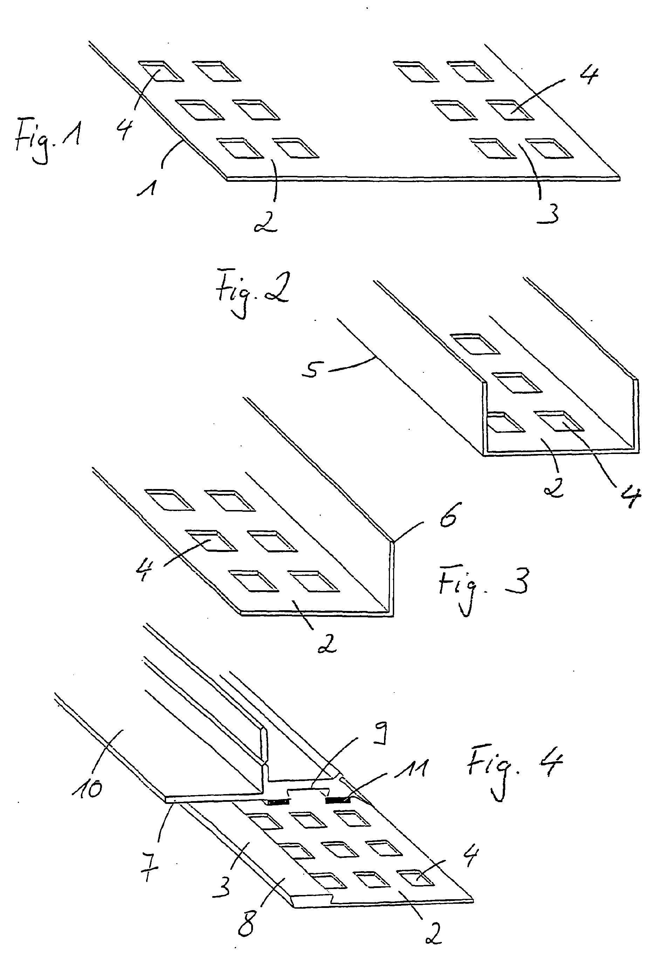

Die Fig. 1 zeigt in einer perspektivischen Darstellung einen flächigen Dicht- und Isolierstoff 1, wie er bei dem erfindungsgemäßen Dicht- und Isoliersystem Verwendung findet. Der Dicht- und Isolierstoff 1 weist zwei Anschlussbereiche 2 und 3 entlang jeweils paralleler Seiten des Dicht- und Isolierstoffs 1 auf, die erfindungsgemäß Aussparungen 4 aufweisen. Die Aussparungen 4 sind regelmäßig in Form von Reihen angeordnet und sind in dem gezeigten Ausführungsbeispiel von rechteckigem Querschnitt. Allerdings ist es selbstverständlich, dass die Querschnittsform oder die äußere Kontur der Aussparungen 4 auch eine andere Form aufweisen kann, wobei diese Form insbesondere auf den Einsatzzweck angepasst sein sollte. So bieten sich eckige Konturen in den Fällen an, in denen bei möglichst geringem Einsatz von Kleber oder Mörtel eine möglichst gute Verkrallung sichergestellt sein soll. Dagegen sind runde Formen der Aussparungen 4 eher für Anwendungsfälle geeignet, in denen die Anschlussbereiche starken Kräften ausgesetzt sind, z.B. durch Temperaturdehnungen, so dass die Gefahr von Rissen, die von den Ecken der Aussparungen 4 ausgehen könnten, besteht. Im übrigen ist zu berücksichtigen, dass die Darstellung der Fig. 1, genauso wie die nachfolgenden Darstellungen, rein schematisch sind, so dass die hier gezeigten Größenverhältnisse keine Einschränkung darstellen. Vielmehr ist davon auszugehen, dass die Dicht- und Isolierstoffe 1 nur sehr kleine Anschlussbereiche im Verhältnis zur gesamten Flächenausdehnung aufweisen. Entsprechend ist auch die Größe der Aussparungen 4 darauf angepasst.

Die Fig. 2 zeigt in einer perspektivischen Darstellung ein U-profilförmiges Anschlusselement 5, welches in der Basis des U-Profils einen Anschlussbereich 2 aufweist, der ebenfalls mit rechteckförmigen Aussparungen 4 durchsetzt ist. Ein derartiges Anschlusselement 5 kann beispielsweise dazu eingesetzt werden, den rechtwinkligen Anschluss von flächigen Dicht- und Isolierstoffen an einem Bauwerksteil zu ermöglichen bzw. eine Verstärkung hierfür bilden.

Die Fig. 3 zeigt ebenfalls in einer perspektivischen Darstellung ein Anschlusselement 6, welches dem Anschlusselement der Fig. 2 sehr ähnlich ist. Das Anschlusselement 6 der Fig. 3 stellt ein Winkelprofil dar, von dem ein Schenkel den Anschlussbereich 2 mit den Aussparungen 4 aufweist. Ähnlich dem Anschlusselement 5 der Fig. 2 kann ein derartiges Anschlusselement beispielsweise wiederum zum rechtwinkligen Anschließen von Dicht- und Isolierfolien an ein Bauwerksteil dienen.

Die Fig. 4 zeigt ein Putzabschlussprofil, das aus den beiden Teilen 8 und 7 besteht. Das erste Teil 8 weist zwei Anschlussbereiche auf, nämlich den ersten Anschlussbereich 2 und den zweiten Anschlussbereich 3. Der erste Anschlussbereich 2 ist als Anschlussbereich wiederum als flächiges Element mit Aussparungen 4 ausgebildet, während der zweite Anschlussbereich 3 einen Teil eines sogenannten Kederanschlusses darstellt, nämlich ein im Querschnitt trapezförmiges Rastelement, welches in die komplementär geformte Rastaufnahme 9 des zweiten Teils 7 des Putzabschlussprofils eingreifen kann. Darüber hinaus ist in dem oberen Teil 7 des Putzabschlussprofils benachbart zur Rastaufnahme 9 jeweils entlang der Längsseiten eine Klebefolie 11 vorgesehen, die zusätzlich zu dem Kederanschlusses 3, 9 eine Klebeverbindung zu dem unteren Teil 8 des Putzabschlussprofils 7, 8 herstellt. Das Putzabschlussprofil weist an seinem oberen Teil 7 zudem noch eine Lasche 10 auf, über die zusätzlich ein flächiger Dicht- und Isolierstoff angeschlossen werden kann (nicht gezeigt).

Den in den Fig. 1 bis 4 gezeigten Dicht- und Isolierstoffen 1 bzw. Anschlusselementen 5 bis 8 ist gemeinsam, dass über die mit Aussparungen 4 versehenen Anschlussbereiche 2 eine gegenseitige Verbindung der Dicht- und Isolierstoffe 1 und der Anschlusselemente 5 bis 8 bzw. ein Anschluss derselben an ein Bauwerksteil ermöglicht wird. Dies geschieht dadurch, dass der Anschlussbereich 2 mit den Aussparungen 4 in ein Mörtel- oder Klebemittelbett eingedrückt wird oder mit Mörtel oder Klebemittel überdeckt wird. Auf diese Weise durchdringt der Mörtel oder das Klebemittel o.ä. die Aussparungen 4 des Anschlussbereichs 2 und hält somit das so zu befestigende Element nach dem Aushärten bereits durch Formschluss fest. Darüber hinaus wird, je nach Mörtel bzw. Klebemittel und der Haftung dieses Mittels an dem Dicht- und Isolierstoff bzw. Anschlusselement, auch eine Stoffverbindung geschaffen.

Neben einer einfachen Anordnung eines Dicht- und Isolierstoffs 1 bzw. der Anschlusselemente 5 bis 8 an einem Bauwerksteil ist auch eine mehrlagige Anordnung oder gegenseitige Verbindung möglich. So kann beispielsweise der Dicht- und Isolierstoff 1 aus Fig. 1 mit dem Winkelprofil 6 aus Fig. 3 verbunden werden, indem beispielsweise der Anschlussbereich 3 des Dicht- und Isolierstoffs 1 über oder unter dem Anschlussbereich 2 des Winkelprofils 6 angeordnet wird und beide von Mörtel oder Klebemittel umschlossen werden.

## Patentansprüche

1. Dicht- und Isoliersystem zum Abdichten, Dämmen und/oder Isolieren von Gebäuden oder Gebäudeteilen und/oder zum Überbrücken von Fugen, insbesondere Fugen zwischen Bauwerksteilen,
mit flächig an den Gebäuden anbringbaren Dicht- und Isolierstoffen (1) sowie Anschlusselementen (5-8), insbesondere flexiblen Dicht- und Isolierprofilen,
wobei die Anschlusselemente (5-8) sowohl zum Verbinden der flächigen Dicht- und Isolierstoffe (1) untereinander als auch zum Anschließen der Dicht- und Isolierstoffe (1) an Bauwerksteile geeignet sind, und
die Anschlusselemente (5-8) und die flächigen Dicht- und Isolierstoffe (I) Anschlussbereiche (2, 3) sowohl zum gegenseitigen Verbinden der flächigen Dicht- und Isolierstoffe (1) untereinander als auch zum Anschließen der flächigen Dicht- und Isolierstoffe (1) an Bauwerksteilen aufweisen, **dadurch gekennzeichnet, dass** die Anschlussbereiche (2, 3) zumindest teilweise von Leerräumen (4) durchbrochen sind, die von pastösen oder flüssigen Massen zum Ver- oder Anbinden der Anschlussbereiche (2, 3), wie Klebemittel, Mörtel oder dergleichen, durchsetzt werden.

2. Dicht- und Isoliersystem nach Anspruch 1, **dadurch gekennzeichnet, dass** die Anschlusselemente (5-8) als Rastelemente, insbesondere in Form eines Kederanschlusses, ausgebildet sind.

3. Dicht- und Isoliersystem nach Anspruch 2, **dadurch gekennzeichnet, dass** die Anschlusselemente (5-8) eine zusätzliche Klebeverbindung (11) aufweisen.

4. Dicht- und Isoliersystem nach Anspruch einem der vorhergehenden Ansprüche, **dadurch gekennzeichnet, dass**
mehrere Anschlussbereiche (2, 3) in mehreren Lagen übereinander anzuordnen sind.

5. Dicht- und Isoliersystem nach Anspruch 4, **dadurch gekennzeichnet, dass** bei mehreren übereinander angeordneten Anschlussbereichen (2, 3) die Leerräume (4) fluchtend oder versetzt zueinander anzuordnen sind.

6. Dicht- und Isoliersystem nach einem der vorhergehenden Ansprüche, **dadurch gekennzeichnet, dass**
der Anschlussbereich (2, 3) zusätzlich flächig stofflich zuverbinden, insbesondere verkleben, ist.

7. Dicht- und Isoliersystem nach einem der vorhergehenden Ansprüche, **dadurch gekennzeichnet, dass**
die Leerräume (4) des Anschlussbereichs (2, 3) als regelmäßig angeordnete Materialaussparungen, insbesondere regelmäßige Lochung, ausgeführt sind.

8. Dicht- und Isoliersystem nach einem der vorhergehenden Ansprüche, **dadurch gekennzeichnet, dass**
die Leerräume (4) einen Flächenanteil von mindestens 25 %, vorzugsweise 30 bis 70 %, insbesondere 50 %, an der Fläche des Anschlussbereichs (2, 3) umfassen.

9. Dicht- und Isoliersystem nach einem der vorhergehenden Ansprüche, **dadurch gekennzeichnet, dass**
die Leerräume (4) in den Anschlussbereichen (2, 3) zusätzlich von Rast- oder Krallelementen durchdrungen werden.

## Claims

1. A sealing and insulating system for sealing, retaining and/or insulating buildings or parts of buildings and/or for bridging gaps, particularly gaps between parts of structures with sealing and insulating materials (1), which may be mounted flat on the buildings, and connecting elements (5-8), particularly flexible sealing and insulating profiles, whereby the connecting elements (5-8) are suitable both for connecting the flat sealing and insulating materials (1) to one another and also for connecting the sealing and insulating materials (1) to parts of structures and the connecting elements (5-8) and the flat sealing and insulating materials (1) have connecting regions (2,3) both for the mutual connection of the flat sealing and insulating materials (1) to one another and for connecting the flat sealing and insulating materials (1) to parts of structures, **characterised in that** the connecting regions (2,3) are interrupted at least partially by empty spaces (4), through which pasty or liquid compositions pass for connecting or tying the connecting regions (2,3), such as adhesive, mortar or the like.

2. A sealing and insulating system as claimed in claim 1, **characterised in that** the connecting elements (5-8), are constructed in the form of locking elements, particularly in the form of an interlocking trapezoidal connection.

3. A sealing and insulating system as claimed in claim 2, **characterised in that** the connecting elements (5-8) include an additional adhesive connection (11).

4. A sealing and insulating system as claimed in one of the preceding claims, **characterised in that** a plurality of connecting regions (2,3) are to be arranged above one another in a number of layers.

5. A sealing and insulating system as claimed in claim 4, **characterised in that** when a number of connecting regions (2,3) are arranged above one another, the empty spaces (4) are to be arranged in alignment or offset from one another.

6. A sealing and insulating system as claimed in one of the preceding claims, **characterised in that** the material of the surface of the connecting region (2,3) is to be additionally connected, particularly by adhesive.

7. A sealing and insulating system as claimed in one of the preceding claims, **characterised in that** the empty spaces (4) in the connecting region (2,3) are constructed in the form of regularly arranged material openings, particularly regular holes.

8. A sealing and insulating system as claimed in one of the preceding claims, **characterised in that** the empty spaces (4) cover a proportion of the surface of the connecting region (2,3) of at least 25%, preferably 30 to 70%, particularly 50%.

9. A sealing and insulating system as claimed in one of the preceding claims, **characterised in that** the locking or hooking elements additionally pass through the empty spaces (4) in the connecting regions (2,3).

## Revendications

1. Système d'étanchéité et d'isolation pour étancher, calorifuger et/ou isoler des bâtiments ou parties de bâtiments et/ou pour couvrir des joints, en particulier des joints entre des parties d'ouvrage,
avec des matériaux d'étanchéité et d'isolation (1), à appliquer en surface sur les bâtiments, ainsi que des éléments de raccord (5-8), en particulier des profilés flexibles d'étanchéité et d'isolation,
les éléments de raccord (5-8) étant aptes à être utilisés pour l'assemblage des matériaux d'étanchéité et d'isolation (1) plans entre eux et pour l'assemblage des matériaux d'étanchéité et d'isolation (1) à des parties d'ouvrage, et
les éléments de raccord (5-8) et les matériaux d'étanchéité et. d'isolation (1) plans comportant des zones d'assemblage (2, 3) pour l'assemblage réciproque des matériaux d'étanchéité et d'isolation (1) plans entre eux et pour l'assemblage des matériaux d'étanchéité et d'isolation (1) plans à des parties d'ouvrage, **caractérisé en ce que**
les zones d'assemblage (2, 3) sont perforées au moins en partie par des espaces vides (4), à travers lesquels passent des substances pâteuses ou liquides, telles que des colles, du mortier ou toute matière similaire, pour l'assemblage ou la liaison des zones d'assemblage (2, 3).

2. Système d'étanchéité et d'isolation selon la revendication 1, **caractérisé en ce que** les éléments de raccord (5-8) sont réalisés sous forme d'éléments de blocage, en particulier sous la forme d'un assemblage à bourrelet.

3. Système d'étanchéité et d'isolation selon la revendication 2, **caractérisé en ce que** les éléments de raccord (5-8) comportent un assemblage collé (11) supplémentaire.

4. Système d'étanchéité et d'isolation selon l'une quelconque des revendications précédentes, **caractérisé en ce que** plusieurs zones d'assemblage (2, 3) doivent être disposées en plusieurs couches superposées.

5. Système d'étanchéité et d'isolation selon la revendication 4, **caractérisé en ce que**, en présence de plusieurs zones d'assemblage (2, 3) superposées, les espaces vides (4) doivent être disposés en alignement ou de manière décalée.

6. Système d'étanchéité et d'isolation selon l'une quelconque des revendications précédentes, **caractérisé en ce que** la zone d'assemblage (2, 3) doit être, en plus, assemblée de manière plane par conjugaison de matière, en particulier collée.

7. Système d'étanchéité et d'isolation selon l'une quelconque des revendications précédentes, **caractérisé en ce que** les espaces vides (4) de la zone d' assemblage (2, 3) sont réalisés sous forme d'évidements de matière disposés régulièrement, en particulier une perforation régulière.

8. Système d'étanchéité et d'isolation selon l'une quelconque des revendications précédentes, **caractérisé en ce que** les espaces vides (4) occupent une partie d'au moins 25 %, de préférence de 30 à 70 %, en particulier de 50 %, sur la surface de la zone d'assemblage (2,3).

9. Système d'étanchéité et d'isolation selon l'une quelconque des revendications précédentes, **caractérisé en ce que** les espaces vides (4) dans les zones d'assemblage (2, 3) sont traversés, en plus, par des éléments de blocage ou des éléments à griffes.
